# EUROPEAN PATENT APPLICATION

(11) **EP 4 826 859 A1**
(43) Date of publication of application: **21.10.2026**
(21) Application number: 24925306.3
(22) Date of filing: 23.02.2024
(51) Int. Cl.: H01M 50/116, H01M 50/124, H01M 50/593, H01M 50/289, H01M 10/653

(54) **BATTERY CELL, BATTERY, AND ELECTRIC DEVICE**

(71) Applicant: Contemporary Amperex Technology Co., Limited, Ningde, Fujian 352100 (CN)
(72) Inventor: CHEN, Gong, Ningde, Fujian 352100 (CN); CHEN, Ningqin, Ningde, Fujian 352100 (CN); LIU, Quanbing, Ningde, Fujian 352100 (CN); YANG, Jianxiong, Ningde, Fujian 352100 (CN); CHEN, Shengyang, Ningde, Fujian 352100 (CN); HAN, Jie, Ningde, Fujian 352100 (CN); HU, Lu, Ningde, Fujian 352100 (CN)
(74) Representative: Kraus & Lederer PartGmbB
(86) International application number: PCT/CN2024/078301
(87) International publication number: WO 2025/175556

(57) **Abstract**

The present application provides a battery cell, a battery, and an electric apparatus. The battery cell includes an electrode assembly, a housing, and an insulating film, where the electrode assembly is accommodated in the housing, and the insulating film is disposed on an outer surface of the housing. Since the outer surface of the housing of the battery cell is provided with an insulating film having insulation performance, the battery cell has good insulation capability and is not prone to short-circuiting with adjacent battery cells, which is conducive to improving the reliability of the battery.

## Description

### TECHNICAL FIELD

The present application relates to the field of battery technologies, and in particular, to a battery cell, a battery, and an electric apparatus.

### BACKGROUND

Batteries have advantages such as high specific energy and high power density, and are widely used in electronic devices and transportation tools, such as mobile phones, notebook computers, electric bicycles, electric vehicles, electric airplanes, electric ships, and electric tools.

With the continuous increase in the frequency of battery use in daily life, how to improve the reliability of a battery has received increasing attention from persons skilled in the art.

### SUMMARY

In view of the above problems, the present application provides a battery cell, a battery, and an electric apparatus. The battery cell has good insulation capability, which is conducive to improving the reliability of the battery.

A first aspect of the present application provides a battery cell. The battery cell includes an electrode assembly, a housing, and an insulating film, where the electrode assembly is accommodated in the housing, and the insulating film is disposed on an outer surface of the housing.

In the above structure, since the outer surface of the housing of the battery cell is provided with an insulating film having insulation performance, the battery cell has good insulation capability and is not prone to short-circuiting with adjacent battery cells, which is conducive to improving the reliability of the battery.

According to the battery cell provided by some embodiments of the present application, a melting point of the insulating film is T, where T≥250°C, so that the insulating film is not prone to melting in a high-temperature environment and can maintain its original structural state, making the housing of the battery cell not prone to being exposed, and reducing the possibility of direct contact between the housings of two adjacent battery cells. Thus, the battery cell has good insulation capability even at high temperatures and is not prone to short-circuiting with adjacent battery cells, which is conducive to improving the reliability of the battery.

According to the battery cell provided by some embodiments of the present application, a dielectric strength of the insulating film is P, where P≥10 kV/mm, so that the insulating film has good insulation performance and is not prone to breakdown. Under the isolation effect of the insulating film, two adjacent battery cells are not prone to short-circuiting, which facilitates the reliability of the battery.

According to the battery cell provided by some embodiments of the present application, the insulating film includes a first film layer and a second film layer that are stacked, where the first film layer is disposed on the outer surface of the housing, and the second film layer is disposed on a side of the first film layer away from the housing. By forming the insulating film as a stack of the first film layer and the second film layer, the insulating film is composed of at least two structural layers, making the insulating film a composite film layer structure, which is convenient for adjusting performance parameters of different film layer structures, so that the insulating film can better meet various requirements.

According to the battery cell provided by some embodiments of the present application, a hardness of the second film layer is higher than a hardness of the first film layer. Since the second film layer is disposed on an outer side of the first film layer away from the housing, by configuring the hardness of the second film layer to be higher than the hardness of the first film layer, the structural layer of the insulating film away from the housing has a higher hardness, which can better protect an internal structural layer of the insulating film. This not only helps to improve the wear resistance of the insulating film, but also helps to reduce the possibility of the insulating film being damaged due to bumps and scratches, which helps to prolong the service life of the insulating film.

According to the battery cell provided by some embodiments of the present application, a melting point of the first film layer is T1, a melting point of the second film layer is T2, and T1>T2. Since the first film layer is disposed on the outer surface of the housing, and the second film layer is disposed on the side of the first film layer away from the housing, the first film layer closer to the housing of the battery cell heats up faster and reaches a higher temperature. By configuring the melting point T1 of the first film layer to be higher than the melting point T2 of the second film layer, the first film layer has better high-temperature resistance, making the first film layer not prone to melting due to excessively high temperatures, which helps to improve the high-temperature resistance of the insulating film.

According to the battery cell provided by some embodiments of the present application, a dielectric strength of the first film layer is D1, where D1≥10 kV/mm, so that the first film layer can improve the dielectric strength of the insulating film and can improve the insulation performance of the insulating film.

According to the battery cell provided by some embodiments of the present application, a surface oxidation index of the second film layer is less than a surface oxidation index of the first film layer. Since the second film layer is disposed on the outer side of the first film layer away from the housing, by setting the surface oxidation index of the second film layer to be less than the surface oxidation index of the first film layer, the second film layer located on the outer layer of the insulating film has stronger oxidation resistance, improving the antioxidant capacity of an outer side surface of the insulating film in contact with air, which is conducive to prolonging the service life of the insulating film.

According to the battery cell provided by some embodiments of the present application, a thickness of the first film layer is greater than a thickness of the second film layer. Since the first film layer is disposed on an inner side of the second film layer, and the melting point T1 of the first film layer is higher than the melting point T2 of the second film layer, by setting the thickness of the first film layer to be greater than the thickness of the second film layer, the thickness of the structural layer with a higher melting point is greater than the thickness of the structural layer with a lower melting point, thereby increasing the portion of the insulating film with high-temperature resistance, which is conducive to improving the high-temperature resistance of the insulating film.

According to the battery cell provided by some embodiments of the present application, a ratio of the thickness of the second film layer to the thickness of the first film layer is R, where 0.25≤R≤0.5, so that the first film layer can occupy a larger portion in the insulating film, which helps to further improve the high-temperature resistance of the insulating film.

According to the battery cell provided by some embodiments of the present application, the first film layer is a polyimide film layer, and the second film layer is a polyethylene terephthalate film layer. Since polyimide has a higher melting point and a higher surface oxidation index compared to polyethylene terephthalate, setting the first film layer as a polyimide film layer and the second film layer as a polyethylene terephthalate film layer can not only effectively improve the antioxidant capacity of an outer surface of the insulating film, but also helps to improve the high-temperature resistance of the insulating film.

According to the battery cell provided by some embodiments of the present application, a thickness of the first film layer is L1, where 20 µm≤L1≤180 µm; and/or, a thickness of the second film layer is L2, where 20 µm≤L2≤120 µm, so that the first film layer and the second film layer have good manufacturability while maintaining relatively low costs.

According to the battery cell provided by some embodiments of the present application, the insulating film further includes a first adhesive layer and a second adhesive layer, where the first adhesive layer is adhered between the second film layer and the first film layer, and the second adhesive layer is adhered between the first film layer and the housing.

According to the battery cell provided by some embodiments of the present application, an adhesive strength of the first adhesive layer is greater than an adhesive strength of the second adhesive layer, so that a peel strength between the second film layer and the first film layer is greater than a peel strength between the first film layer and the housing, and an adhesive force between the second film layer and the first film layer is greater than an adhesive force between the first film layer and the housing. As a result, during peeling of the insulating film from the housing, the first adhesive layer and the second adhesive layer are not prone to separating, making it convenient to peel the insulating film from the housing.

According to the battery cell provided by some embodiments of the present application, an interlayer peel strength between the second adhesive layer and the first film layer is A, an interlayer peel strength between the second adhesive layer and the housing is B, and A>B, so that an adhesive force between the second adhesive layer and the first film layer is greater than an adhesive force between the second adhesive layer and the housing. As a result, during peeling of the insulating film from the housing, the second adhesive layer is not prone to separating from the first film layer, making it convenient to peel the second adhesive layer from the housing, which facilitates cleaning of the second adhesive layer.

According to the battery cell provided by some embodiments of the present application, an interlayer peel strength between the first adhesive layer and the second film layer is C, an interlayer peel strength between the first adhesive layer and the first film layer is D, the interlayer peel strength between the second adhesive layer and the first film layer is A, and the interlayer peel strength between the second adhesive layer and the housing is B, where A≥300 N/m, B≥300 N/m, C≥300 N/m, and D≥300 N/m, so that the first adhesive layer and the second adhesive layer are firmly adhered, and the first adhesive layer and the housing are firmly adhered. This not only makes the insulating film not prone to detaching from the housing, but also makes the insulating film not prone to delamination, which is conducive to improving the structural integrity of the insulating film, facilitating the complete peeling of the insulating film from the housing by tearing or other methods.

According to the battery cell provided by some embodiments of the present application, A≥350 N/m, B≥350 N/m, C≥350 N/m, and D≥350 N/m, which can further improve the firmness of adhesion between the first adhesive layer and the second adhesive layer, and the firmness of adhesion between the first adhesive layer and the housing. This makes the insulating film not prone to detaching from the housing while also making the insulating film not prone to delamination, facilitating the complete peeling of the insulating film from the housing.

According to the battery cell provided by some embodiments of the present application, the second adhesive layer includes a pressure-sensitive adhesive. This allows the insulating film to be peeled off the housing relatively easily without being prone to contaminating the housing, making it convenient to replace the insulating film of the battery cell.

A second aspect of the present application provides a battery. The battery includes the battery cell provided in any one of the above technical solutions.

Since the battery includes the battery cell provided in the above technical solution, adjacent battery cells in the battery are not prone to short-circuiting, making the battery cell have good reliability.

According to the battery provided by some embodiments of the present application, the battery further includes a separator, where a plurality of battery cells are provided, and the plurality of battery cells are stacked along a first direction, and the separator is clamped between the housings of two adjacent battery cells so as to space the two adjacent battery cells apart from each other.

By clamping the separator between the housings of the two battery cells, the two adjacent battery cells can be spaced apart, which is conducive to improving the insulation performance between the two adjacent battery cells, further reducing the possibility of a short circuit between the two adjacent battery cells.

According to the battery provided by some embodiments of the present application, the separator includes microcellular foamed polypropylene, so that the separator has good insulation, high-temperature resistance, and cushioning capability.

According to the battery provided by some embodiments of the present application, the separator includes a frame body and an opening enclosed by the frame body, where the frame body abuts against the insulating film of the battery cell, and the opening is placed between two adjacent battery cells to form an isolation cavity.

Since the frame body is clamped between the insulating films of two adjacent battery cells, the separator not only increases the distance between the two adjacent battery cells, but the isolation cavity therein can also form an air layer between the insulating films of the two adjacent battery cells. This is conducive to improving the insulation performance between the two adjacent battery cells, further reducing the possibility of a short circuit between adjacent battery cells, which is conducive to improving the reliability of the battery.

According to the battery provided by some embodiments of the present application, a plurality of openings are provided. By dispersing and setting a plurality of openings in the separator, the frame body is enclosed between adjacent openings, and the frame body can improve the structural strength of the separator, which is conducive to reducing the possibility of the separator being damaged.

According to an electric apparatus provided by some embodiments of the present application, the electric apparatus includes the battery provided in any one of the above technical solutions, where the battery is configured to provide electrical energy.

The technical solutions provided by the embodiments of the present disclosure bring at least the following beneficial effects:

The present application provides a battery cell. The battery cell includes an electrode assembly, a housing, and an insulating film, where the electrode assembly is accommodated in the housing, and the insulating film is disposed on an outer surface of the housing. Since the outer surface of the housing of the battery cell is provided with an insulating film having insulation performance, the battery cell has good insulation capability and is not prone to short-circuiting with adjacent battery cells, which is conducive to improving the reliability of the battery.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. Moreover, throughout the accompanying drawings, the same reference signs represent the same components.
FIG. 1 is a schematic structural diagram of a vehicle according to some embodiments of the present application;
FIG. 2 is a schematic structural exploded view of a battery according to some embodiments of the present application;
FIG. 3 is a schematic structural exploded view of a battery cell according to some embodiments of the present application;
FIG. 4 is a cross-sectional view of an insulating film in a battery cell according to some embodiments of the present application;
FIG. 5 is a cross-sectional view of a separator in a battery according to some embodiments of the present application;
FIG. 6 is a schematic structural diagram of a separator in a battery according to some embodiments of the present application;
FIG. 7 is an enlarged view of position E in FIG. 5; and
FIG. 8 is a schematic structural diagram of a separator in a battery according to some other embodiments of the present application.

In the drawings:
1. vehicle; 2. battery; 3. controller; 4. motor; 5. box; 5a. first box portion; 5b. second box portion; 5c. accommodating space; 7. battery cell; 20. housing; 201. housing body; 202. cover body; 30. electrode assembly; 40. insulating film; 401. first film layer; 402. second film layer; 403. first adhesive layer; 404. second adhesive layer; 50. separator; 501. frame body; and 502. opening.

### DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

It should be noted that unless otherwise stated, the technical terms or scientific terms used in the present application should have general meanings as understood by persons skilled in the art to which the embodiments of the present application belong.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitations on embodiments of the present application.

In addition, the technical terms "first", "second", and the like are merely for the purpose of description, and shall not be understood as any indication or implication of relative importance or any implicit indication of the number of technical features indicated. In the description of embodiments of the present application, "a plurality of" means at least two unless otherwise specifically stated.

In the descriptions of the embodiments of the present application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of the present application as suitable to specific situations.

In the descriptions of the embodiments of the present application, unless otherwise specified and defined explicitly, that a first feature is "above" or "below" a second feature may mean that the first and second features are in direct contact or that the first and second features are in indirect contact via an intermediate medium. Moreover, that the first feature is "above", "over", and "on" the second feature may mean that the first feature is directly above or obliquely above the second feature or simply mean that the first feature has a higher level than the second feature. That the first feature is "under", "below", or "beneath" the second feature means that the first feature is directly or obliquely below the second feature, or only means that the first feature is lower than the second feature in the horizontal direction.

Currently, from the perspective of market development, application of batteries is being more extensive. Batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of battery, the demands of people for batteries are also continuously increasing.

The battery mentioned in the embodiments of the present application is a single physical module that includes one or more battery cells for providing higher voltage and capacity.

The battery cell may be a secondary battery cell, and the secondary battery cell refers to a battery cell whose active material can be activated for continuous use through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead-acid battery cell, and the like.

For example, the battery cell may be a cylindrical battery cell, a prismatic battery cell, a pouch battery cell, or a battery cell of another shape. The prismatic battery cell includes a square-shell battery cell, a blade-shaped battery cell, and a polygonal battery, such as a hexagonal battery.

In some embodiments, the battery may be a battery module. When a plurality of battery cells are provided, the plurality of battery cells are arranged and fixed to form a battery module.

In some embodiments, the battery may be a battery pack. The battery pack includes a box and a battery cell. The battery cell or battery module is accommodated in the box.

In some embodiments, the box may be used as part of the chassis structure of a vehicle. For example, part of the box may become at least part of the chassis of the vehicle, or part of the box may become at least parts of a cross beam and longitudinal beam of the vehicle.

In some embodiments, the battery may be an energy storage apparatus. The energy storage apparatus includes an energy storage container, an energy storage cabinet, and the like.

In order to meet the requirements for output voltage, electric quantity, and other factors, a relatively large number of battery cells are usually provided in a battery. In order to fully utilize the internal space of the battery, a plurality of battery cells in the battery are usually arranged in close proximity to each other, resulting in a risk of contact between the housings of adjacent battery cells, leading to short-circuiting between adjacent battery cells.

In order to improve the insulation capability of the battery cell and improve the reliability of the battery, some embodiments of the present application provide a battery cell. The battery cell includes an electrode assembly, a housing, and an insulating film, where the electrode assembly is accommodated in the housing, and the insulating film is disposed on an outer surface of the housing. Since the outer surface of the housing of the battery cell is provided with an insulating film having insulation performance, the battery cell has good insulation capability and is not prone to short-circuiting with adjacent battery cells, which is conducive to improving the reliability of the battery.

The battery cell described in the embodiments of the present application is applicable to batteries and electric apparatuses using a battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

For ease of description, an electric apparatus according to an embodiment of the present application being a vehicle is used as an example for description of the following embodiments.

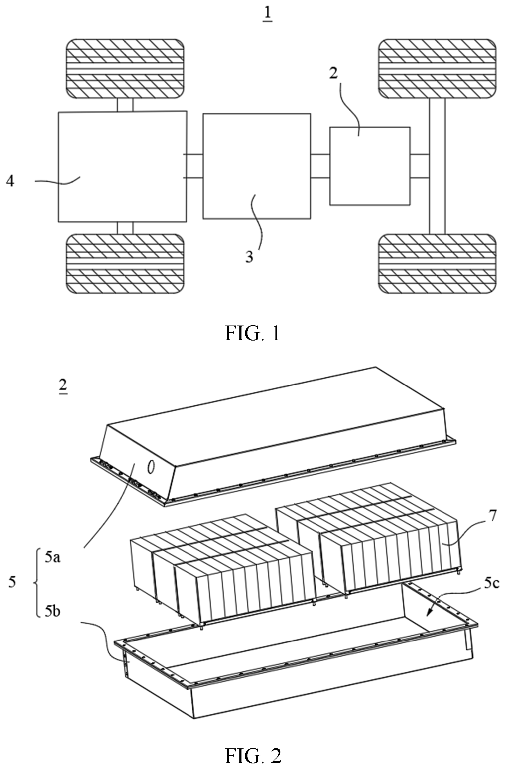

FIG. 1 is a schematic structural diagram of a vehicle according to some embodiments of the present application.

As shown in FIG. 1, a vehicle 1 is provided with a battery 2 inside, where the battery 2 may be disposed at the bottom, front, or rear of the vehicle 1. The battery 2 may be configured to supply power to the vehicle 1. For example, the battery 2 may be used as an operational power supply for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of the present application, the battery 2 can be used as not only the operational power supply for the vehicle 1 but also a driving power supply for the vehicle 1, replacing all or part of the fossil fuel or the natural gas to provide driving power for the vehicle 1.

FIG. 2 is a schematic structural exploded view of a battery according to some embodiments of the present application. As shown in FIG. 2, the battery 2 includes a box 5 and battery cells 7, where the battery cells 7 are accommodated in the box 5. The battery cell 7 refers to a smallest unit constituting a battery.

The box 5 is configured to accommodate the battery cells 7, and the box 5 may be a variety of structures. In some embodiments, the box 5 may include a first box portion 5a and a second box portion 5b. The first box portion 5a and the second box portion 5b fit together to jointly define an accommodating space 5c for accommodating the battery cells 7. The second box portion 5b may be a hollow structure with an opening at one end, the first box portion 5a is a plate-shaped structure, and the first box portion 5a covers the opening side of the second box portion 5b so as to form the box 5 having the accommodating space 5c. Alternatively, both the first box portion 5a and the second box portion 5b may be hollow structures with an opening at one side, and the opening side of the first box portion 5a is engaged with the opening side of the second box portion 5b so as to form the box 5 having the accommodating space 5c. Certainly, the first box portion 5a and the second box portion 5b may be of various shapes, such as cylinder or cuboid.

In order to improve airtightness after connection of the first box portion 5a and the second box portion 5b, a sealing member, such as sealing gum and sealing ring, may further be disposed between the first box portion 5a and the second box portion 5b.

Assuming that the first box portion 5a fits on the top of the second box portion 5b, the first box portion 5a may also be referred to as an upper box part and the second box portion 5b may also be referred to as a lower box part.

In the battery 2, one or more battery cells 7 may be provided. If a plurality of battery cells 7 are provided, the plurality of battery cells 7 may be connected in series, parallel, or series-parallel, where being connected in series-parallel means that the plurality of battery cells 7 are connected in both series and parallel. The plurality of battery cells 7 may be directly connected in series, parallel, or series-parallel, and then an entirety of the plurality of battery cells 7 is accommodated in the box 5; or certainly, the plurality of battery cells 7 may be connected in series, parallel, or series-parallel first to form a battery module 6, and then a plurality of battery modules 6 are connected in series, parallel, or series-parallel to form an entirety which is accommodated in the box 5.

The battery cell 7 may be a cylindrical battery cell, a prismatic battery cell, or a battery cell of another shape.

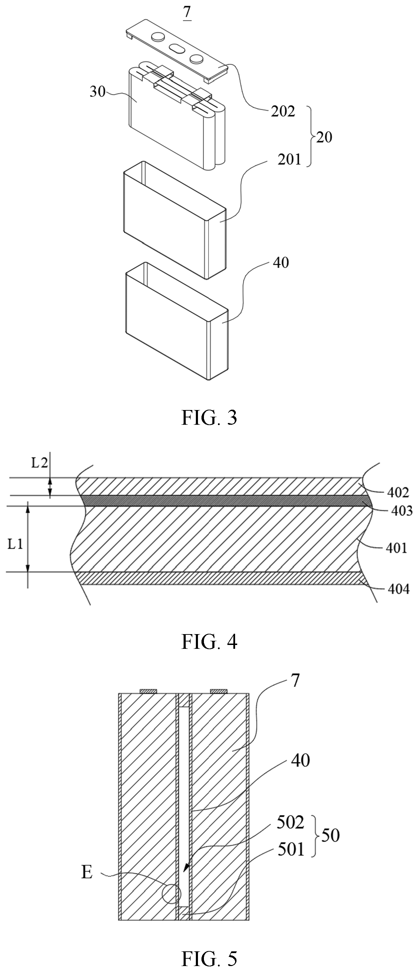

As shown in FIG. 3, in some embodiments, the battery cell 7 includes a housing 20 and an electrode assembly 30. The electrode assembly 30 is accommodated in the housing 20.

The housing 20 may have various shapes and sizes, such as a cuboid shape, a hexagonal prism shape, or the like. Specifically, the shape of the housing 20 may be determined based on a specific shape and size of the electrode assembly 30. The material of the housing 20 may be made of various materials, such as copper, iron, aluminum, stainless steel, and aluminum alloy. This is not particularly limited in the embodiments of the present application.

The electrode assembly 30 is a component in which electrochemical reactions take place in the battery cell 7. The housing 20 may contain one or more electrode assemblies 30.

Some embodiments of the present application provide a battery cell 7. As shown in FIG. 3, the battery cell 7 includes an electrode assembly 30, a housing 20, and an insulating film 40, where the electrode assembly 30 is accommodated in the housing 20, and the insulating film 40 is disposed on an outer surface of the housing 20.

The housing 20, as a component in the battery cell 7 configured to enclose a sealed space, may include a housing body 201 and a cover body 202. The housing body 201 is a hollow structure with an open end, and the cover body 202 correspondingly covers one opening of the housing body 201 to form hermetical connection so as to form a sealed space for accommodating the electrode assembly 30 and an electrolyte.

The electrode assembly 30 is accommodated in the hollow structure enclosed by the housing 20, and may include electrode plates and a separator 50. The electrode plate may include a positive electrode plate or a negative electrode plate with opposite polarities. The positive electrode plate and the negative electrode plate may serve as a positive electrode and a negative electrode, respectively. During charging and discharging of the battery cell 7, active ions (for example, lithium ions) are intercalated and deintercalated between the positive electrode and the negative electrode. The separator 50 is stacked between the positive electrode plate and the negative electrode plate, and is configured to separate the positive electrode plate from the negative electrode plate, preventing short-circuiting between the positive electrode and negative electrode while also allowing active ions to pass through.

The electrolyte conducts ions between the positive electrode and the negative electrode. The electrolyte may be in a liquid state, a gel state, or a solid state, and persons skilled in the art can select the type of electrolyte according to actual conditions.

The insulating film 40 may be a thin-film structure with insulation performance. By disposing the insulating film 40 on the outer surface of the housing 20, the insulation capability of the housing 20 can be improved, so that the battery cell 7 has good insulation capability and is not prone to short-circuiting with adjacent battery cells 7, which is conducive to improving the reliability of the battery 2.

For example, the insulating film 40 may be made of materials having insulation performance such as plastic or rubber, so that the insulating film 40 has good insulation performance.

In the above structure, since the outer surface of the housing 20 of the battery cell 7 is provided with an insulating film 40 having insulation performance, the battery cell 7 has good insulation capability and is not prone to short-circuiting with adjacent battery cells 7, which is conducive to improving the reliability of the battery 2.

In some embodiments, a melting point of the insulating film 40 is T, where T≥250°C.

Since the battery cells 7 in the battery 2 generate heat during operation, causing their temperature to rise, especially when the battery cell 7 undergoes thermal runaway, the temperature of the battery cell 7 rapidly increases, which may cause the insulating film 40 on the outer surface of the housing 20 of the battery cell 7 to melt, resulting in a risk of contact between the housings 20 of two adjacent battery cells 7, which can easily generate electric arcs and cause open flames.

By setting the range of the melting point T of the insulating film 40 to T≥250°C, the insulating film 40 is not prone to melting in a high-temperature environment and can maintain its original structural state, making the housing 20 of the battery cell 7 not prone to being exposed, and reducing the possibility of direct contact between the housings 20 of two adjacent battery cells 7. Thus, the battery cell 7 has good insulation capability even at high temperatures and is not prone to short-circuiting with adjacent battery cells 7, which is conducive to improving the reliability of the battery 2.

In some embodiments, the range of the melting point T of the insulating film 40 can be set to 280°C≤T≤400°C, so that while the insulating film 40 has a higher melting point, it is also conducive to reducing the manufacturing difficulty of the insulating film 40, which helps to reduce the cost of the insulating film 40. For example, the melting point T of the insulating film 40 can be set to 300°C, 350°C, or 380°C, so that the insulating film 40 is not prone to melting even in a high-temperature environment, making the battery cell 7 have good insulation capability even at high temperatures and being not prone to short-circuiting with adjacent battery cells 7, which is conducive to improving the reliability of the battery 2.

In some embodiments, a dielectric strength of the insulating film 40 is P, where P≥10 kV/mm.

Dielectric strength is a measure of the electrical strength of a material as an insulator, which is the maximum voltage per unit thickness that a specimen can withstand when the sample is broken down. By setting the range of the dielectric strength P of the insulating film 40 to P≥10 kV/mm, the insulating film 40 has good insulation performance and is not prone to breakdown. Under the isolation effect of the insulating film 40, two adjacent battery cells 7 are not prone to short-circuiting, which facilitates the reliability of the battery 2.

In some embodiments, the range of the dielectric strength P of the insulating film 40 can be set to 10 kV/mm≤P≤30 kV/mm, which allows the insulating film 40 to have good insulation performance while also reducing the material cost of manufacturing the insulating film 40, helping to reduce the cost of the insulating film 40. For example, the dielectric strength P of the insulating film 40 can be set to 15 kV/mm, 20 kV/mm, or 25 kV/mm, so that the insulating film 40 can have good insulation capability without having a high cost, which is conducive to controlling the cost of the battery 2.

For example, the dielectric strength of the insulating film 40 may be obtained by testing the insulating film 40 in accordance with the national standard GB/T 1408.1-2006. The specific test method may refer to national standard GB/T 1408.1-2006, which is not be repeated here.

In some embodiments, as shown in FIG. 4, the insulating film 40 includes a first film layer 401 and a second film layer 402 that are stacked, where the first film layer 401 is disposed on the outer surface of the housing 20, and the second film layer 402 is disposed on a side of the first film layer 401 away from the housing 20.

The first film layer 401 and the second film layer 402 may be different structural layers in the insulating film 40. The first film layer 401 and the second film layer 402 are stacked in a thickness direction of the insulating film 40 to form the insulating film 40. The first film layer 401 may be a structural layer connected to the outer surface of the housing 20, and the second film layer 402 may be disposed on the side of the first film layer 401 away from the housing 20. By forming the insulating film 40 as a stack of the first film layer 401 and the second film layer 402, the insulating film 40 is composed of at least two structural layers, making the insulating film 40 a composite film layer structure, which is convenient for adjusting performance parameters of different film layer structures, so that the insulating film 40 can better meet various requirements.

For example, the number of layers of the first film layer 401 and the number of layers of the second film layer 402 may be set to one layer or at least two layers, which can be set by persons skilled in the art according to actual conditions, so that the plurality of first film layers 401 and second film layers 402 that are stacked can jointly meet the requirements of the insulating film 40.

In some embodiments, a hardness of the second film layer 402 is higher than a hardness of the first film layer 401.

The hardness of the second film layer 402 may refer to the Brinell hardness of the second film layer 402, and the hardness of the first film layer 401 may refer to the Brinell hardness of the first film layer 401. Since the second film layer 402 is disposed on an outer side of the first film layer 401 away from the housing 20, by configuring the hardness of the second film layer 402 to be higher than the hardness of the first film layer 401, the structural layer of the insulating film 40 away from the housing 20 has a higher hardness, which can better protect an internal structural layer of the insulating film 40. This not only helps to improve the wear resistance of the insulating film 40, but also helps to reduce the possibility of the insulating film 40 being damaged due to bumps and scratches, which helps to prolong the service life of the insulating film 40.

For example, the measurement of the hardness of the second film layer 402 and the hardness of the first film layer 401 may be performed separately when the second film layer 402 and the first film layer 401 are in a separated state without forming the insulating film 40. In this state, the second film layer 402 and the first film layer 401 are separated, and the hardness of the second film layer 402 and the hardness of the first film layer 401 can be conveniently measured separately. The measurement of the hardness of the second film layer 402 and the hardness of the first film layer 401 may also be performed by disassembling the insulating film 40 to separate the second film layer 402 from the first film layer 401, so that the hardness of the second film layer 402 and the hardness of the first film layer 401 may be conveniently measured separately.

For example, the hardness of the second film layer 402 may be obtained by testing the second film layer 402 in accordance with the national standard GB/T 231.1-2002. The specific test method may refer to national standard GB/T 231.1-2002, which is not be repeated here.

In some embodiments, a melting point of the first film layer 401 is T1, a melting point of the second film layer 402 is T2, and T1>T2.

By configuring the melting point T1 of the first film layer 401 to be higher than the melting point T2 of the second film layer 402, the first film layer 401 has better high-temperature resistance compared to the second film layer 402. Since the first film layer 401 is disposed on the outer surface of the housing 20, and the second film layer 402 is disposed on the side of the first film layer 401 away from the housing 20, the first film layer 401 closer to the housing 20 of the battery cell 7 heats up faster and reaches a higher temperature. By configuring the melting point T1 of the first film layer 401 to be higher than the melting point T2 of the second film layer 402, the first film layer 401 has better high-temperature resistance, making the first film layer 401 not prone to melting due to excessively high temperatures, which helps to improve the high-temperature resistance of the insulating film 40.

In some embodiments, a dielectric strength of the first film layer 401 is D1, where D1≥10 kV/mm.

By configuring the dielectric strength D1 of the first film layer 401 to be D1≥10 kV/mm, the first film layer 401 can improve the dielectric strength of the insulating film 40 and can improve the insulation performance of the insulating film 40. In some embodiments, the range of the dielectric strength D1 of the first film layer 401 can be set to 10 kV/mm≤P≤30 kV/mm, so that while the first film layer 401 has good insulation performance, it is also conducive to reducing the material cost of manufacturing the first film layer 401, which helps to reduce the cost of the first film layer 401. For example, the dielectric strength D1 of the first film layer 401 can be set to 15 kV/mm, 20 kV/mm, or 25 kV/mm, so that the first film layer 401 can have good insulation capability without having a high cost, which is conducive to controlling the cost of the battery 2.

The measurement of the dielectric strength of the first film layer 401 can be performed as an independent structural film layer when the first film layer 401 is not formed into the insulating film 40. In this state, the first film layer 401 is independent from the second film layer 402, and the dielectric strength of the first film layer 401 can be conveniently measured by performing a dielectric strength measurement on the first film layer 401.

In some embodiments, a dielectric strength of the second film layer 402 is D2, where D2≥10 kV/mm. By setting the range of the dielectric strength D1 of the first film layer 401 and the range of the dielectric strength D2 of the second film layer 402 to D1≥10 kV/mm and D2≥10 kV/mm, respectively, the dielectric strength P of the insulating film 40 formed by stacking the first film layer 401 and the second film layer 402 can be in the range of P≥10 kV/mm, which is conducive to improving the dielectric strength of the insulating film 40 and improving the insulation performance of the insulating film 40.

The range of the dielectric strength D2 of the second film layer 402 can be set to 10 kV/mm≤D2≤30 kV/mm, so that while the second film layer 402 has good insulation performance, it is also conducive to reducing the material cost of manufacturing the second film layer 402, which helps to reduce the cost of the second film layer 402. For example, the dielectric strength D2 of the second film layer 402 can be set to 15 kV/mm, 20 kV/mm, or 25 kV/mm, so that the second film layer 402 can have good insulation capability without having a high cost, which is conducive to controlling the cost of the battery 2.

In some embodiments, a surface oxidation index of the second film layer 402 is less than a surface oxidation index of the first film layer 401.

The surface oxidation index is an indicator used to evaluate antioxidant capacity. Since the second film layer 402 is disposed on the outer side of the first film layer 401 away from the housing 20, by setting the surface oxidation index of the second film layer 402 to be less than the surface oxidation index of the first film layer 401, the second film layer 402 located on the outer layer of the insulating film 40 has stronger oxidation resistance, improving the antioxidant capacity of an outer side surface of the insulating film 40 in contact with air, which is conducive to prolonging the service life of the insulating film 40.

The surface oxidation index can be calculated by the change in mass in air at a certain temperature. A smaller value of the surface oxidation index indicates stronger antioxidant capacity.

In some embodiments, a thickness of the first film layer 401 is greater than a thickness of the second film layer 402.

Since the first film layer 401 is disposed on an inner side of the second film layer 402, and the melting point T1 of the first film layer 401 is higher than the melting point T2 of the second film layer 402, by setting the thickness of the first film layer 401 to be greater than the thickness of the second film layer 402, the thickness of the structural layer with a higher melting point is greater than the thickness of the structural layer with a lower melting point, thereby increasing the portion of the insulating film 40 with high-temperature resistance, which is conducive to improving the high-temperature resistance of the insulating film 40.

In some embodiments, a ratio of the thickness of the second film layer 402 to the thickness of the first film layer 401 is R, where 0.25≤R≤0.5.

By setting the range of the ratio R of the thickness of the second film layer 402 to the thickness of the first film layer 401 to 0.25≤R≤0.5, the first film layer 401 can occupy a larger portion in the insulating film 40, which helps to further improve the high-temperature resistance of the insulating film 40.

In some embodiments, the range of the ratio R of the thickness of the second film layer 402 to the thickness of the first film layer 401 is set to 0.3≤R≤0.5, so that the first film layer 401 can occupy a larger portion in the insulating film 40. For example, the ratio R of the thickness of the second film layer 402 to the thickness of the first film layer 401 can be set to 0.4, 0.45, or 0.5, so that the first film layer 401 can occupy a larger portion in the insulating film 40.

In some embodiments, the first film layer 401 is a polyimide film layer, and the second film layer 402 is a polyethylene terephthalate film layer.

A polyimide film layer may refer to a film layer structure made of polyimide, and a polyethylene terephthalate film layer may refer to a film layer structure made of polyethylene terephthalate. Since polyimide has a higher melting point and a higher surface oxidation index compared to polyethylene terephthalate, setting the first film layer 401 as a polyimide film layer and the second film layer 402 as a polyethylene terephthalate film layer can not only effectively improve the antioxidant capacity of an outer surface of the insulating film 40, but also helps to improve the high-temperature resistance of the insulating film 40.

In some embodiments, a thickness of the first film layer 401 is L1, where 20 µm≤L1≤180 µm; and/or, a thickness of the second film layer 402 is L2, where 20 µm≤L2≤120 µm.

For example, the range of the thickness L1 of the first film layer 401 can be set to 20 µm≤L1≤180 µm, while the range of the thickness L2 of the second film layer 402 is set to 20 µm≤L2≤120 µm; or the range of the thickness L1 of the first film layer 401 can be set to 20 µm≤L1≤180 µm, while the range of the thickness L2 of the second film layer 402 is not specifically limited, which can be set by persons skilled in the art according to actual conditions; or the range of the thickness L2 of the second film layer 402 can be set to 20 µm≤L2≤120 µm, while the range of the thickness L1 of the first film layer 401 is not specifically limited, which can be set by persons skilled in the art according to actual conditions.

By setting the range of the thickness L1 of the first film layer 401 to 20 µm≤L1≤180 µm, the first film layer 401 not only has a certain structural strength, which facilitates manufacturing, but also helps to reduce the cost of the first film layer 401. In some embodiments, the range of the thickness L1 of the first film layer 401 is set to 25 µm≤L1≤150 µm, so that the first film layer 401 has sufficient strength while having a lower cost. For example, the thickness L1 of the first film layer 401 can be set to 50 µm, 80 µm, or 100 µm, so that the first film layer 401 has good manufacturability while having a lower cost.

By setting the range of the thickness L2 of the second film layer 402 to 20 µm≤L2≤120 µm, the second film layer 402 not only has a certain structural strength, which facilitates manufacturing, but also helps to control the cost of the second film layer 402. In some embodiments, the range of the thickness L2 of the second film layer 402 is set to 20 µm≤L2≤120 µm, so that the second film layer 402 has sufficient strength while having a lower cost. For example, the thickness L1 of the second film layer 402 can be set to 25 µm, 35 µm, or 50 µm, so that the second film layer 402 has good manufacturability and can protect the internal structure of the insulating film 40.

In some embodiments, the insulating film 40 further includes a first adhesive layer 403 and a second adhesive layer 404, where the first adhesive layer 403 is adhered between the second film layer 402 and the first film layer 401, and the second adhesive layer 404 is adhered between the first film layer 401 and the housing 20.

The first adhesive layer 403 and the second adhesive layer 404 may be different adhesive layers provided in the insulating film 40 for adhesion. The first adhesive layer 403, as an adhesive connecting the second film layer 402 and the first film layer 401, is adhered between the second film layer 402 and the first film layer 401, achieving the stacked connection of the second film layer 402 and the first film layer 401. The second adhesive layer 404, as an adhesive connecting the first film layer 401 and the housing 20, is adhered between the first film layer 401 and the housing 20, achieving the connection of the insulating film 40 on the outer side surface of the housing 20.

In some embodiments, an adhesive strength of the first adhesive layer 403 is greater than an adhesive strength of the second adhesive layer 404.

By setting the adhesive strength of the first adhesive layer 403 to be greater than the adhesive strength of the second adhesive layer 404, a peel strength between the second film layer 402 and the first film layer 401 is greater than a peel strength between the first film layer 401 and the housing 20, and an adhesive force between the second film layer 402 and the first film layer 401 is greater than an adhesive force between the first film layer 401 and the housing 20. As a result, during peeling of the insulating film 40 from the housing 20, the first adhesive layer 403 and the second adhesive layer 404 are not prone to separating, making it convenient to peel the insulating film 40 from the housing 20.

For example, the adhesive strength of the first adhesive layer 403 may be measured by an interlayer peel strength between the second film layer 402 and the first film layer 401, and the adhesive strength of the second adhesive layer 404 may be measured by an interlayer peel strength between the first film layer 401 and the housing 20. For example, the interlayer peel strength may be obtained by testing in accordance with the national standard GB/T 2792-2014, and the specific test method may refer to the national standard GB/T 2792-2014, which is not be repeated here.

In some embodiments, an interlayer peel strength between the second adhesive layer 404 and the first film layer 401 is A, an interlayer peel strength between the second adhesive layer 404 and the housing 20 is B, and A>B.

By setting the interlayer peel strength B between the second adhesive layer 404 and the housing 20 to be greater than the interlayer peel strength A between the second adhesive layer 404 and the first film layer 401, an adhesive force between the second adhesive layer 404 and the first film layer 401 is greater than an adhesive force between the second adhesive layer 404 and the housing 20. As a result, during peeling of the insulating film 40 from the housing 20, the second adhesive layer 404 is not prone to separating from the first film layer 401, making it convenient to peel the second adhesive layer 404 from the housing 20, which facilitates cleaning of the second adhesive layer 404.

For example, both the interlayer peel strength B between the second adhesive layer 404 and the housing 20 and the interlayer peel strength A between the second adhesive layer 404 and the first film layer 401 may be obtained by testing in accordance with the national standard GB/T 2792-2014, and the specific test method may refer to the national standard GB/T 2792-2014, which is not be repeated here.

In some embodiments, an interlayer peel strength between the first adhesive layer 403 and the second film layer 402 is C, an interlayer peel strength between the first adhesive layer 403 and the first film layer 401 is D, the interlayer peel strength between the second adhesive layer 404 and the first film layer 401 is A, and the interlayer peel strength between the second adhesive layer 404 and the housing 20 is B, where A≥300 N/m, B≥300 N/m, C≥300 N/m, and D≥300 N/m.

By setting the range of the interlayer peel strength C between the first adhesive layer 403 and the second film layer 402 to C≥300 N/m, setting the range of the interlayer peel strength D between the first adhesive layer 403 and the first film layer 401 to D≥300 N/m, setting the range of the interlayer peel strength A between the second adhesive layer 404 and the first film layer 401 to A≥300 N/m, and setting the range of the interlayer peel strength B between the second adhesive layer 404 and the housing 20 to B≥300 N/m, the first adhesive layer 403 and the second adhesive layer 404 are firmly adhered, and the first adhesive layer 403 and the housing 20 are firmly adhered. This not only makes the insulating film 40 not prone to detaching from the housing 20, but also makes the insulating film 40 not prone to delamination, which is conducive to improving the structural integrity of the insulating film 40, facilitating the complete peeling of the insulating film 40 from the housing 20 by tearing or other methods.

In some embodiments, A≥350 N/m, B≥350 N/m, C≥350 N/m, and D≥350 N/m.

By setting the range of the interlayer peel strength A between the second adhesive layer 404 and the first film layer 401 to A≥350 N/m, setting the range of the interlayer peel strength B between the second adhesive layer 404 and the housing 20 to B≥350 N/m, setting the range of the interlayer peel strength C between the first adhesive layer 403 and the second film layer 402 to C≥350 N/m, and setting the range of the interlayer peel strength D between the first adhesive layer 403 and the first film layer 401 to D≥350 N/m, the firmness of adhesion between the first adhesive layer 403 and the second adhesive layer 404 is further improved, and the firmness of adhesion between the first adhesive layer 403 and the housing 20 is improved. This makes the insulating film 40 not prone to detaching from the housing 20 while also making the insulating film 40 not prone to delamination, facilitating the complete peeling of the insulating film 40 from the housing 20.

In some embodiments, the second adhesive layer 404 includes a pressure-sensitive adhesive.

Since pressure-sensitive adhesive can quickly adhere to the surface of an adherend when subjected to pressure, and after damaging the adhesive surface of the adherend, the pressure-sensitive adhesive is not prone to contaminating the surface of the adherend. This allows the insulating film 40 to be peeled off the housing 20 relatively easily without being prone to contaminating the housing 20, making it convenient to replace the insulating film 40 of the battery cell 7.

For example, the pressure-sensitive adhesive may include an acrylic pressure-sensitive adhesive or a rubber-based pressure-sensitive adhesive. The rubber-based pressure-sensitive adhesive may be a natural rubber pressure-sensitive adhesive, a synthetic rubber, a silicone pressure-sensitive adhesive, or a reclaimed rubber pressure-sensitive adhesive.

Some embodiments of the present application further provide a battery 2. The battery 2 includes the battery cell 7 provided in the above technical solution.

Since the battery 2 includes the battery cell 7 provided in the above technical solution, adjacent battery cells 7 in the battery 2 are not prone to short-circuiting, making the battery cell 7 have good reliability.

In some embodiments, the battery 2 further includes a separator 50, where a plurality of battery cells 7 are provided, and the plurality of battery cells 7 are stacked along a first direction, and the separator 50 is clamped between the housings 20 of two adjacent battery cells 7 so as to space the two adjacent battery cells 7 from each other.

By making the battery 2 include a plurality of battery cells 7 and electrically connecting the plurality of battery cells 7, the battery 2 can meet the requirements for output voltage, electric quantity, and other factors. By stacking the plurality of battery cells 7 along the first direction, the plurality of battery cells 7 can fully utilize the space in the battery 2, which is conducive to improving the energy density of the battery 2.

By clamping the separator 50 between the housings 20 of the two battery cells 7, the two adjacent battery cells 7 can be spaced apart, which is conducive to improving the insulation performance between the two adjacent battery cells 7, further reducing the possibility of a short circuit between the two adjacent battery cells 7.

In some embodiments, the separator 50 includes microcellular foamed polypropylene.

Microcellular foamed polypropylene refers to a porous polypropylene foam material with pore sizes smaller than 100 µm. Since microcellular foamed polypropylene has a porous structure, it can reduce the weight of the separator 50, facilitating the lightweighting of the battery 2. Since polypropylene has good insulation performance, the separator 50 include microcellular foamed polypropylene, so that the separator 50 has good insulation performance.

Since microcellular foamed polypropylene has a relatively high heat distortion temperature, by making the separator 50 include microcellular foamed polypropylene, the separator 50 has good high-temperature resistance, allowing the separator 50 to adapt to the heat-generating battery cell 7.

In addition, making the separator 50 that is clamped between the housings 20 of two adjacent battery cells 7 include microcellular foamed polypropylene not only allows the separator 50 to be compressed and deformed when the battery cell 7 swells, thereby cushioning and absorbing the swelling of the battery cell 7; but also allows the vibrations and impacts received by the battery cell 7 to be absorbed by the separator 50, which is conducive to improving the reliability of the battery cell 7.

The pores in the microcellular foamed polypropylene effectively reduce the convection of gas within the pores, thereby effectively reducing heat transfer caused by air convection, allowing the separator 50 to maintain a low thermal conductivity stably for a long time based on its pore structure.

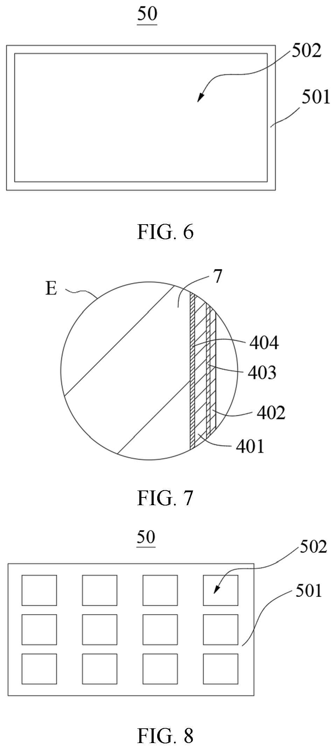

In some embodiments, as shown in FIGs. 5 and 6, the separator 50 includes a frame body 501 and an opening 502 enclosed by the frame body 501. As shown in FIG. 7, the frame body 501 abuts against the insulating film 40 of the battery cell 7, and the opening 502 is placed between two adjacent battery cells 7 to form an isolation cavity.

The frame body 501 may be a main structure in the separator 50, which may be used as a frame structure in the separator 50. The frame body 501 can support other structures in the separator 50 or form other structures in the separator 50. The opening 502 may be a space structure in the separator 50 where no material is provided. When the separator 50 is clamped between the insulating films 40 of two adjacent battery cells 7, the opening 502 can form an isolation cavity located between the two adjacent battery cells 7. Since the frame body 501 is clamped between the insulating films 40 of two adjacent battery cells 7, the separator 50 not only increases the distance between the two adjacent battery cells 7, but the isolation cavity therein can also form an air layer between the insulating films 40 of the two adjacent battery cells 7. This is conducive to improving the insulation performance between the two adjacent battery cells 7, further reducing the possibility of a short circuit between adjacent battery cells 7, which is conducive to improving the reliability of the battery 2.

In some embodiments, as shown in FIG. 8, a plurality of openings 502 are provided.

By dispersing and setting a plurality of openings 502 in the separator 50, the frame body 501 is enclosed between adjacent openings 502, and the frame body 501 can improve the structural strength of the separator 50, which is conducive to reducing the possibility of the separator 50 being damaged.

For example, the plurality of openings 502 are uniformly spaced in the separator 50, so that the structural strength of various parts of the separator 50 is relatively uniform.

In some embodiments, the cross-sectional shape of the opening 502 may be rectangular, circular, pentagonal, elliptical, or other shapes. Persons skilled in the art can set the cross-sectional shape of the opening 502 according to actual conditions.

Some embodiments of the present application further provide an electric apparatus. The electric apparatus includes the battery 2 provided in the above technical solution, where the battery 2 is configured to provide electrical energy.

Some embodiments of the present application provide a battery cell 7. The battery cell 7 includes an electrode assembly 30, a housing 20, and an insulating film 40, where the electrode assembly 30 is accommodated in the housing 20, and the insulating film 40 is disposed on an outer surface of the housing 20. A melting point T of the insulating film 40 is set to T≥250°C, and a dielectric strength P of the insulating film 40 is set to P≥10 kV/mm. The insulating film 40 includes a first film layer 401 and a second film layer 402 that are stacked. The first film layer 401 is disposed on the outer surface of the housing 20, and the second film layer 402 is disposed on a side of the first film layer 401 away from the housing 20. A melting point T1 of the first film layer 401 is greater than a melting point T2 of the second film layer 402. A ratio of a thickness of the second film layer 402 to a thickness of the first film layer 401 is R, where 0.25≤R≤0.5. The first film layer 401 is a polyimide film layer, and the second film layer 402 is a polyethylene terephthalate film layer. Since the outer surface of the housing 20 of the battery cell 7 in the above structure is provided with an insulating film 40 having insulation performance, the battery cell 7 has good insulation capability and is not prone to short-circuiting with adjacent battery cells 7, which is conducive to improving the reliability of the battery 2.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell, comprising:
an electrode assembly;
a housing, wherein the electrode assembly is accommodated in the housing; and
an insulating film, disposed on an outer surface of the housing.

2. The battery cell according to claim 1, wherein a melting point of the insulating film is T, and T≥250°C.

3. The battery cell according to claim 1 or 2, wherein a dielectric strength of the insulating film is P, and P≥10 kV/mm.

4. The battery cell according to any one of claims 1 to 3, wherein the insulating film comprises a first film layer and a second film layer that are stacked, the first film layer is disposed on the outer surface of the housing, and the second film layer is disposed on a side of the first film layer away from the housing.

5. The battery cell according to claim 4, wherein a hardness of the second film layer is higher than a hardness of the first film layer.

6. The battery cell according to claim 4 or 5, wherein a melting point of the first film layer is T1, a melting point of the second film layer is T2, and T1>T2.

7. The battery cell according to any one of claims 4 to 6, wherein a dielectric strength of the first film layer is D1, and D1≥10 kV/mm.

8. The battery cell according to any one of claims 4 to 7, wherein a surface oxidation index of the second film layer is less than a surface oxidation index of the first film layer.

9. The battery cell according to any one of claims 4 to 8, wherein a thickness of the first film layer is greater than a thickness of the second film layer.

10. The battery cell according to claim 9, wherein a ratio of the thickness of the second film layer to the thickness of the first film layer is R, and 0.25≤R≤0.5.

11. The battery cell according to any one of claims 4 to 10, wherein the first film layer is a polyimide film layer, and the second film layer is a polyethylene terephthalate film layer.

12. The battery cell according to any one of claims 4 to 11, wherein a thickness of the first film layer is L1, and 20 µm≤L1≤180 µm; and/or, a thickness of the second film layer is L2, and 20 µm≤L2≤120 µm.

13. The battery cell according to any one of claims 4 to 12, wherein the insulating film further comprises a first adhesive layer and a second adhesive layer, the first adhesive layer is adhered between the second film layer and the first film layer, and the second adhesive layer is adhered between the first film layer and the housing.

14. The battery cell according to claim 13, wherein an adhesive strength of the first adhesive layer is greater than an adhesive strength of the second adhesive layer.

15. The battery cell according to claim 13 or 14, wherein an interlayer peel strength between the second adhesive layer and the first film layer is A, an interlayer peel strength between the second adhesive layer and the housing is B, and A>B.

16. The battery cell according to any one of claims 13 to 15, wherein an interlayer peel strength between the first adhesive layer and the second film layer is C, an interlayer peel strength between the first adhesive layer and the first film layer is D, an interlayer peel strength between the second adhesive layer and the first film layer is A, an interlayer peel strength between the second adhesive layer and the housing is B, A≥300 N/m, B≥300 N/m, C≥300 N/m, and D≥300 N/m.

17. The battery cell according to claim 16, wherein A≥350 N/m, B≥350 N/m, C≥350 N/m, and D≥350 N/m.

18. The battery cell according to any one of claims 13 to 17, wherein the second adhesive layer comprises a pressure-sensitive adhesive.

19. A battery, comprising the battery cell according to any one of claims 1 to 18.

20. The battery according to claim 19, further comprising a separator, wherein a plurality of the battery cells are provided, the plurality of battery cells are stacked along a first direction, and the separator is clamped between housings of two adjacent battery cells so as to space the two adjacent battery cells apart from each other.

21. The battery according to claim 20, wherein the separator comprises microcellular foamed polypropylene.

22. The battery according to claim 20 or 21, wherein the separator comprises a frame body and an opening enclosed by the frame body, the frame body abuts against the insulating film of the battery cell, and the opening is placed between two adjacent battery cells to form an isolation cavity.

23. The battery according to claim 22, wherein a plurality of the openings are provided.

24. An electric apparatus, comprising the battery according to any one of claims 19 to 23, wherein the battery is configured to provide electrical energy.
